# DEMANDE DE BREVET EUROPEEN

(11) **EP 1 204 255 A1**
(43) Date de publication de la demande: **08.05.2002**
(21) Numéro de dépôt: 01402831.0
(22) Date de dépôt: 31.10.2001
(51) Int. Cl.: H04L 25/06, H04L 5/06

(54) **Procédé et dispositif de réception de signaux radioélectriques sur plusieurs fréquences**

(30) Priorité: 06.11.2000 FR 0014157
(71) Demandeur: ATRAL, F-38190 Crolles (FR)
(72) Inventeur: Laurens, Gaston, 38570 Le Cheylas (FR); Cariou, Laurent, 38240 Meylan (FR)
(74) Mandataire: Casalonga, Axel

(57) **Abrégé**

Procédé et dispositif de réception de signaux radioélectriques, dans lesquels une multiplicité de circuits de réception sont sensibles respectivement à des signaux radioélectriques à capter sur des fréquences ou des canaux différents et présentent respectivement des sorties de signal reçu, afin de délivrer un signal de sortie numérique représentatif, par rapport à au moins un seuil, du signal reçu sur chaque fréquence ou canal. Durant des périodes d'écoute successives (Pe), les sorties de signal des circuits de réception (6) sont reliées sélectivement à une ligne unique de sortie (9). Pendant des phases d'adaptation (Pa) situées au début de chaque période d'écoute, la valeur d'un seuil (S1) est adapté à l'amplitude du signal issu de ladite ligne unique (9) durant cette phase d'adaptation. Le signal issu de la ligne unique est comparé à ce seuil adapté (S1) afin de délivrer un signal de sortie numérique (18) représentatif, par rapport à ce seuil, du signal issu de cette ligne unique durant la phase de détection (Pd) de chaque période d'écoute (Pe) succédant à sa phase d'adaptation précitée.

## Description

La présente invention a pour objet un procédé et un dispositif de réception de signaux radioélectriques à capter sur des fréquences ou des canaux différents.

Habituellement, notamment dans les systèmes d'alarmes, pour capter un signal radioélectrique sur une bande de fréquences dite fréquence de réception ou un canal déterminés, on utilise une voie de réception qui comprend un circuit (HF) de réception haute fréquence relié à une antenne et une chaîne (BF) de détection reliée au circuit de réception, qui assure l'amplification du signal reçu et qui délivre généralement un signal de sortie numérique représentatif, en particulier par rapport à un seuil, du signal reçu. Ce signal de sortie est délivré à un circuit de traitement qui assure son décodage en vue de l'exploiter.

Lorsqu'on souhaite recevoir des signaux radioélectriques sur des fréquences ou des canaux différents, on prévoit un nombre correspondant de voies de réception telles que définies ci-dessus, qui délivrent leurs signaux de sortie à une unité de traitement au travers d'un multiplexeur. Une telle disposition est encombrante et coûte cher. De plus, elle engendre une consommation important d'énergie électrique qui constitue un handicap dans le cas d'une alimentation électrique par piles.

La présente invention a pour but de réduire les inconvénients ci-dessus.

La présente invention propose tout d'abord un procédé de réception de signaux radioélectriques, dans lequel une multiplicité de circuits de réception sont sensibles respectivement à des signaux radioélectriques à capter sur des fréquences ou des canaux différents et présentent respectivement des sorties de signal reçu, afin de délivrer un signal de sortie numérique représentatif, par rapport à au moins un seuil, du signal reçu sur chaque fréquence ou canal.

Selon l'invention, le procédé consiste :
- à relier sélectivement, durant des périodes d'écoute successives (Pe), les sorties de signal des circuits de réception à une ligne unique de sortie ;
- à diviser chaque période d'écoute en une phase d'adaptation suivie d'une phase de détection ;
- à, au cours de la phase d'adaptation (Pa) de chaque période d'écoute, annuler le seuil de la phase d'écoute précédente et générer un nouveau seuil d'origine (S1) dont la valeur est adaptée à l'amplitude du signal issu de ladite ligne unique durant cette phase d'adaptation ;
- et à comparer le signal issu de la ligne unique à ce seuil adapté afin de délivrer un signal de sortie numérique représentatif, par rapport à ce seuil, du signal issu de cette ligne unique durant la phase de détection (Pd) de chaque période d'écoute (Pe) succédant à sa phase d'adaptation précitée.

Selon la présente invention, le procédé peut avantageusement consister à générer un seuil d'origine (S1) adapté à l'amplitude du signal issu de ladite ligne unique au terme de ladite phase d'adaptation.

Selon la présente invention, le procédé peut avantageusement consister à générer un seuil adapté et un second seuil supérieur à ce seuil adapté ; et à comparer l'amplitude du signal issu de la ligne unique à ce second seuil au moins tant que l'amplitude de ce signal est inférieure à la valeur de ce second seuil durant la phase de détection de chaque période succédant à sa phase d'adaptation précitée.

Selon la présente invention, le procédé peut avantageusement consister, au cours de ladite phase de détection, à faire varier ledit seuil d'origine par intégration du signal issu de ladite ligne unique.

Selon la présente invention, le procédé peut avantageusement consister à n'alimenter en énergie électrique que le circuit de détection sélectionné.

Selon la présente invention, le procédé peut avantageusement consister à prolonger la période d'écoute au cas où le signal numérique de sortie correspond à un signal attendu.

La présente invention propose également un dispositif de réception de signaux radioélectriques à capter sur des fréquences ou des canaux différents.

Selon l'invention, le dispositif comprend :
- une multiplicité de circuits de réception sensibles respectivement à des signaux radioélectriques à capter sur des fréquences ou des canaux différents et présentant respectivement des sorties de signal reçu ;
- un moyen d'aiguillage qui présente des entrées respectivement reliées aux sorties de signal reçu desdits circuits de réception et qui présente une ligne unique de sortie ;
- un organe de pilotage pour commander ledit moyen d'aiguillage de façon à relier sélectivement, durant des périodes d'écoute successives, les entrées de ce moyen d'aiguillage à sa ligne unique de sortie ;
- une chaîne unique de détection présentant une entrée reliée à ladite ligne unique et comprenant un moyen de comparaison pour délivrer un signal de sortie numérique représentatif, par rapport à au moins un seuil, du signal issu de cette ligne unique ;
- et un moyen d'adaptation activé par ledit organe de pilotage et permettant, pendant des phases d'adaptation situées au début de chaque période d'écoute, d'adapter la valeur du seuil précité à l'amplitude du signal issu de ladite ligne unique durant cette phase d'adaptation.

Selon l'invention, le moyen d'adaptation est activé de préférence pendant une durée déterminée au début de chaque période d'écoute.

Selon l'invention, la chaîne de détection comprend de préférence un circuit d'intégration du signal issu de ladite ligne unique, ce circuit étant soumis audit moyen d'adaptation.

Selon l'invention, la chaîne de détection peut avantageusement comprendre des moyens pour fixer un seuil adapté et un second seuil plus élevé que le premier, ces moyens étant commandés par ledit organe de pilotage de telle sorte que le second seuil est activé au moins tant que l'amplitude du signal délivré sur la ligne unique est inférieure à la valeur de ce second seuil durant la phase de chaque période succédant à sa phase d'adaptation précitée.

Selon l'invention, la chaîne de détection comprend de préférence un comparateur dont une entrée est reliée à ladite ligne unique au travers d'une résistance et à un potentiel de référence au travers d'un condensateur et dont l'autre entrée est reliée à ladite ligne unique, ce comparateur délivrant ledit signal de sortie. Ledit moyen d'adaptation comprend un interrupteur de court-circuitage de cette résistance activé par ledit organe de pilotage pendant chaque phase d'adaptation.

Selon l'invention, la chaîne de détection comprend de préférence un pont résistif, ladite résistance et ledit condensateur étant reliés à ladite entrée du comparateur au travers de ce pont de façon à générer un second seuil de valeur accrue. Ledit moyen d'adaptation comprend un interrupteur de court-circuitage de ce pont activé par ledit organe de pilotage au moins tant que l'amplitude du signal issu de la ligne unique est inférieure à la valeur de ce second seuil durant la phase de chaque période succédant à sa phase d'adaptation précitée.

Selon l'invention, le dispositif comprend de préférence un circuit de traitement des signaux de sortie de la chaîne de détection, agissant sur ledit organe de pilotage de façon à ce que ce dernier prolonge la durée d'une période d'écoute en cas de réception, pendant cette période, d'un signal radioélectrique attendu.

Selon l'invention, la chaîne de détection comprend de préférence un amplificateur monté entre son entrée précitée et son moyen de détection précité.

Selon l'invention, l'organe de pilotage peut avantageusement comprendre des moyens pour alimenter sélectivement les circuits de réception.

La présente invention sera mieux comprise à l'étude d'un dispositif de réception de signaux radioélectriques à capter sur des fréquences ou des canaux différents, décrit à titre d'exemple non limitatif et illustré par le dessin sur lequel :
- la figure 1 représente le schéma électronique d'un dispositif de réception de signaux radioélectriques selon la présente invention ;
- la figure 2 représente un premier diagramme de fonctionnement du dispositif de réception de la figure 1 ;
- et la figure 3 représente un second diagramme de fonctionnement du dispositif de réception de la figure 1.

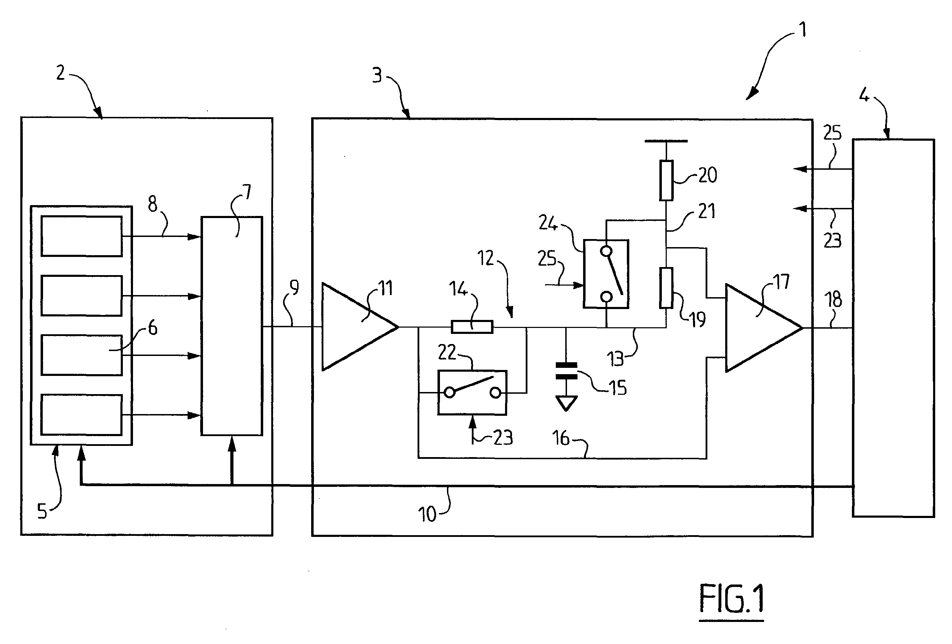

En se reportant à la figure 1, on voit qu'on a représenté un dispositif 1 de réception de signaux radioélectriques qui comprend une unité de réception haute fréquence (HF) 2, une chaîne d'amplification et de détection basse fréquence (BF) 3 et un organe électronique de pilotage et de traitement 4, ce dernier comprenant en particulier un microprocesseur programmé.

L'unité de réception 2 comprend un bloc de réception 5 constitué d'une multiplicité de circuits de réception 6, par exemple des récepteurs à super-réaction ou des récepteurs super-hétérodynes reliés à une antenne. Ces circuits de réception sont respectivement sensibles à des signaux radioélectriques à capter sur des fréquences ou des canaux différents.

Les sorties de signal des circuits de réception 6 sont reliées à des entrées parallèles d'un multiplexeur 7 par des lignes 8.

La sortie du multiplexeur 7 est reliée à l'entrée de la chaîne d'amplification de détection 3 par une ligne unique 9.

L'organe de pilotage 4 est adapté pour commander sélectivement le bloc de réception 5 et du multiplexeur 7, au travers d'une ligne de commande 10, de telle sorte que le multiplexeur 7 délivre sur sa ligne unique de sortie 9 les signaux issus successivement et respectivement des circuits de réception 6.

Ce mode de fonctionnement du bloc de réception 5 peut être assuré par le fait que l'organe de pilotage 4 commande successivement les alimentations en énergie électrique des circuits de réception 6 de façon à n'alimenter en énergie électrique que le circuit de réception 6 sélectionné.

La chaîne d'amplification et de détection 3 comprend un amplificateur 11 dont l'entrée est reliée à la ligne unique de sortie 9 du multiplexeur 7 de l'unité de réception 2 et dont la sortie est reliée à un circuit d'intégration 12 qui présente une ligne de sortie 13.

Ce circuit d'intégration 12 comprend une résistance 14 branchée entre la sortie de l'amplificateur 11 et la ligne 13 et un condensateur 15 branché entre la ligne 13 et la masse. De plus, la ligne 13 et la sortie de l'amplificateur 11, via une ligne 16, sont reliées aux entrées d'un comparateur 17 dont la ligne de sortie numérique 18 est reliée à une entrée de données de l'organe de pilotage et de traitement 4.

Ainsi constitué, le circuit d'intégration 12 génère un seuil S1 qui évolue par intégration avec l'amplitude du signal de sortie de l'amplificateur 11.

De plus, dans l'exemple représenté, la ligne 13 est reliée au comparateur 17 via un pont résistif qui comprend une résistance 19 et une résistance 20 dont la ligne commune 21 est reliée au comparateur 17. Ce montage permet de générer un second seuil S2 dont la valeur est supérieure au seuil S1 précité d'une valeur déterminée par le choix des résistances 19 et 20.

La chaîne d'amplification et de détection 3 comprend en outre un organe d'adaptation constitué par un interrupteur 22 monté en parallèle à la résistance 14 du circuit d'intégration 12, cet interrupteur 22 permettant, lorsqu'il est en position fermée, de court-circuiter la résistance 14 et ainsi de relier directement la sortie de l'amplificateur 11 à la ligne 13. Ce commutateur 22 est susceptible d'être commandé par l'organe de pilotage 4 via une ligne de commande 23.

La chaîne d'amplification et de détection 3 comprend également un interrupteur 24 branché en parallèle à la résistance 19 et susceptible d'être commandé par l'organe de pilotage 4 via une ligne 25, cet interrupteur 24 permettant, lorsqu'il est en position fermée, de court-circuiter la résistance 19 et ainsi de relier directement la ligne 13 au comparateur 17 afin d'inhiber le seuil S2.

De façon générale, le dispositif de réception 1 qui vient d'être décrit fonctionne de la manière suivante.

Lorsque l'organe de pilotage 4 déclenche une période d'écoute Pe d'un circuit de réception 6 sélectionné, en plaçant en même temps le multiplexeur 7 dans la position correspondante, il commande la fermeture de l'interrupteur 22 via la ligne de commande 23 pour le placer en position fermée pendant une durée déterminée correspondant à une phase d'adaptation Pa.

Au cours de cette phase d'adaptation Pa, l'amplitude du signal apparaissant sur la ligne 13 suit sensiblement l'amplitude du signal de sortie de l'amplificateur 11.

Au terme de la phase d'adaptation Pa, lorsque l'interrupteur 22 revient à sa position ouverte, le circuit d'intégration 12 génère un seuil adapté S1 d'origine dont la valeur d'origine est sensiblement égale à la valeur du signal issu de l'amplificateur 11 à ce moment. Il en résulte que l'amplitude ou la valeur de ce seuil S1 d'origine est indépendante de l'état de la sortie de l'amplificateur 11 avant l'engagement de cette phase d'écoute Pe.

Ce seuil adapté S1 d'origine évolue alors, comme décrit précédemment, pendant une phase de détection Pd, jusqu'au terme de la période d'écoute Pe du circuit de réception 6 sélectioné.

En même temps, bien que la position de l'interrupteur d'accroissement de seuil 24 n'ait pas d'influence pendant la phase d'adaptation Pa, l'organe de pilotage 4 place ou maintient cet interrupteur 24 en position ouverte de préférence au début de la phase d'adaptation Pa, de façon à ce que le seuil S2 précité soit généré.

Ainsi, au début de la phase de détection Pd, le comparateur 17 compare le signal issu de l'amplificateur 11 via la ligne 16 à la valeur du seuil S2.

Au cas où ce seuil S2 ne serait pas dépassé, l'interrupteur 24 est maintenu à sa position ouverte. Cela permet de s'affranchir des signaux de bruits des circuits.

En cas de dépassement de ce seuil S2 selon des conditions prédéterminées par l'organe de pilotage 4 en fonction du signal issu de la ligne de sortie 18, l'organe de pilotage 4 commande l'interrupteur 24 de manière à le placer en position fermée de telle sorte que, par la suite au cours de la phase de détection Pd et jusqu'au terme de la période d'écoute Pe, le seuil S2 soit inhibé et que le comparateur 17 compare le signal issu de l'amplificateur 11 via la ligne 16 au seuil S1 généré par le circuit d'intégration 12. Au cours de cette phase de détection Pd, le circuit de pilotage et de traitement 4 analyse le signal de sortie issu de la ligne 18 et peut ordonner un rallongement de la période d'écoute Pe.

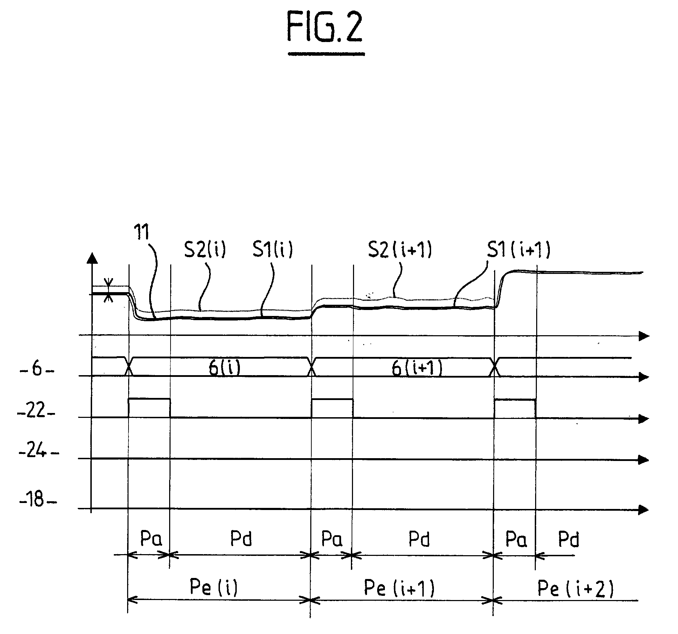

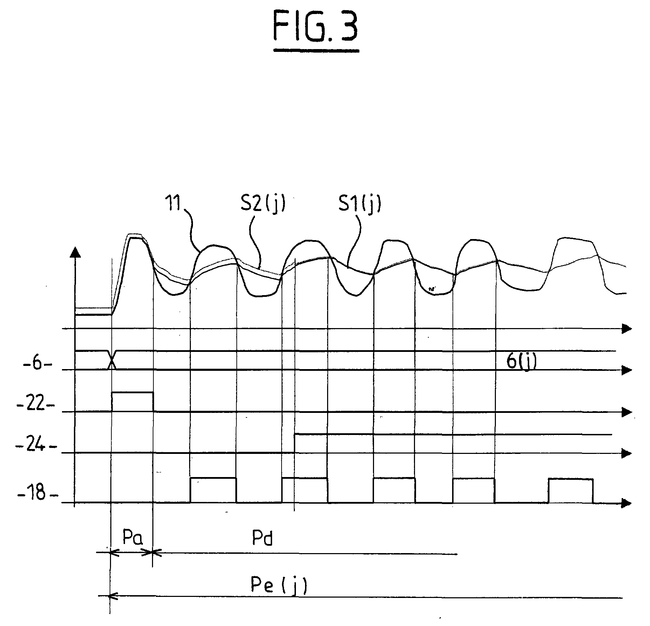

En se reportant aux figures 2 et 3, on va décrire des exemples de fonctionnement du dispositif de réception 1 activés par l'organe de pilotage et de traitement 4..

Dans l'exemple représenté sur la figure 2, on voit qu'à la fin de la période d'écoute Pe(i) sur une fréquence f(i) d'un circuit de détection 6(i) sélectionné, la sortie de l'amplificateur 11 délivre un signal approximativement égal au seuil S1(i) du circuit d'intégration 12 et que le seuil accru S2(i) est activé par le fait que l'interrupteur 24 est en position ouverte.

L'organe de pilotage 4 ordonne alors le démarrage de la période d'écoute Pe(i+1) d'un circuit de détection 6(i+1) nouvellement sélectionné et place le multiplexeur en correspondance.

L'organe de pilotage 4 ordonne la fermeture de l'interrupteur d'adaptation 22 pendant la phase d'adaptation Pa(i+1). L'interrupteur 24 reste ouvert.

A la fin de cette phase d'adaptation Pa, un seuil adapté S1(i+1) et un seuil accru S2(i+1) sont générés comme décrit précédemment, quelle que soit la valeur précédente du seuil S1(i) existant à la fin de la période d'écoute Pe(i) associée au circuit de réception 6(i) sélectionné antérieurement.

En supposant que le circuit de réception sélectionné 6(i+1) ne reçoit pas sur son antenne de signal radioélectrique, le signal issu de l'amplificateur 11 reste sensiblement au niveau du seuil adapté S1(i+1) et ne dépasse jamais le seuil accru S2(i +1). La sortie 18 du comparateur 17 délivre à l'organe de pilotage et de traitement 4 un signal constant par exemple égal à ZERO. L'interrupteur 24 de génération du seuil accru S2 reste à sa position ouverte. A la fin de la période d'écoute Pe(i+1), un autre circuit de détection 6(i+2) est sélectionné et une nouvelle période d'écoute associée Pe(i +2) est enclenchée.

En se reportant à la figure 3, on va maintenant décrire comment fonctionne le dispositif de réception 1 dans le cas où un signal est reçu par un circuit de réception 6(j) pendant sa période d'écoute Pe(j).

Pendant la phase d'adaptation Pa de cette période d'écoute Pe(j), l'interrupteur 22 est fermé et l'interrupteur 24 de génération de seuil accru est ouvert.

A la fin de cette phase d'adaptation Pa, c'est-à-dire lorsque l'interrupteur d'adaptation 22 s'ouvre, un seuil adapté S1(j) est généré par le circuit d'intégration 12, la valeur d'origine de ce seuil initial étant sensiblement égal à la valeur du signal sortant de l'amplificateur 11.

L'interrupteur 24 restant ouvert, le comparateur 17 compare la valeur du signal issu de l'amplificateur 11 via la ligne 16 par rapport à la valeur du seuil accru S2(j).

Quand l'amplitude du signal passe au-dessus du seuil accru S2(j), un signal par exemple égal à UN est généré sur la sortie 18 du comparateur 17 et est délivré à l'organe de pilotage et de traitement 4.

Par exemple au bout d'un temps prédéterminé ou à l'apparition d'un deuxième créneau égal à UN sur la sortie 18 du comparateur 17, l'organe de pilotage et de traitement 4 envoie un signal à l'interrupteur 24 via la ligne 25 de manière à le placer à sa position fermée. Le seuil accru S2(j) est alors inhibé et le seuil de comparaison utilisé par le comparateur 17 est alors le seuil S1(j). La détection du signal issu de l'amplificateur 11 et provenant du circuit de réception 6(j) se poursuit par rapport à ce seuil S1(3).

L'organe de pilotage et de traitement 4 ordonne alors au bloc 5 de prolonger la période d'écoute du circuit de réception 6(j) sélectionné, par exemple pendant une durée déterminée au moins nécessaire à l'acquisition d'un signal attendu susceptible d'être reçu par ce circuit de réception 6(j).

A la fin de cette période d'écoute Pe(j), l'organe de pilotage 4 sélectionne un autre circuit de réception 6 et engendre une période d'écoute Pe pour ce nouveau circuit de réception.

La présente invention ne se limite pas à l'exemple ci-dessus décrit. Bien des variantes de réalisation sont possibles sans sortir du cadre défini par les revendications annexées.

## Revendications

1. Procédé de réception de signaux radioélectriques, dans lequel une multiplicité de circuits de réception sont sensibles respectivement à des signaux radioélectriques à capter sur des fréquences ou des canaux différents et présentent respectivement des sorties de signal reçu, afin de délivrer un signal de sortie numérique représentatif, par rapport à au moins un seuil, du signal reçu sur chaque fréquence ou canal, **caractérisé par le fait qu'**il consiste :
- à relier sélectivement, durant des périodes d'écoute successives (Pe), les sorties de signal des circuits de réception (6) à une ligne unique de sortie (9) ;
- à diviser chaque période d'écoute en une phase d'adaptation suivie d'une phase de détection ;
- à, au cours de la phase d'adaptation (Pa) de chaque période d'écoute, annuler le seuil de la phase d'écoute précédente et générer un nouveau seuil d'origine (S1) dont la valeur est adaptée à l'amplitude du signal issu de ladite ligne unique (9) durant cette phase d'adaptation ;
- et à comparer le signal issu de la ligne unique à ce seuil adapté (S1) afin de délivrer un signal de sortie numérique (18) représentatif, par rapport à ce seuil, du signal issu de cette ligne unique durant la phase de détection (Pd) de chaque période d'écoute (Pe) succédant à sa phase d'adaptation précitée.

2. Procédé selon la revendication 1, **caractérisé par le fait qu'**il consiste à générer un seuil d'origine (S1) adapté à l'amplitude du signal issu de ladite ligne unique (9) au terme de ladite phase d'adaptation.

3. Procédé selon l'une des revendications 1 et 2, **caractérisé par le fait qu'**il consiste :
- à générer un seuil adapté S1) et un second seuil (S2) supérieur à ce seuil adapté ;
- et à comparer l'amplitude du signal issu de la ligne unique (9) à ce second seuil (S2) au moins tant que l'amplitude de ce signal est inférieure à la valeur de ce second seuil durant la phase de détection (Pd) de chaque période succédant à sa phase d'adaptation précitée (Pa).

4. Procédé selon l'une quelconque des revendications 1 à 3, **caractérisé par le fait qu'**il consiste, au cours de ladite phase de détection, à faire varier ledit seuil d'origine par intégration du signal issu de ladite ligne unique (9).

5. Procédé selon l'une quelconque des revendications 1 à 4, **caractérisé par le fait qu'**il consiste à n'alimenter en énergie électrique que le circuit de détection sélectionné (6).

6. Procédé selon l'une quelconque des revendications 1 à 5, **caractérisé par le fait qu'**il consiste à prolonger la période d'écoute (Pe) au cas où le signal numérique de sortie (18) correspond à un signal attendu.

7. Dispositif de réception de signaux radioélectriques, **caractérisé par le fait qu'**il comprend :
- une multiplicité de circuits de réception (6) sensibles respectivement à des signaux radioélectriques émis sur des fréquences ou des canaux différents et présentant respectivement des sorties de signal reçu ;
- un moyen d'aiguillage (7) qui présente des entrées respectivement reliées aux sorties de signal reçu desdits circuits de réception et qui présente une ligne unique de sortie (9) ;
- un organe de pilotage (4) pour commander ledit moyen d'aiguillage (7) de façon à relier sélectivement, durant des périodes d'écoute successives (Pe), les entrées de ce moyen d'aiguillage à sa ligne unique de sortie ;
- une chaîne unique de détection (3) présentant une entrée reliée à ladite ligne unique (9) et comprenant un moyen de comparaison (17) pour délivrer un signal de sortie numérique (18) représentatif, par rapport à au moins un seuil (S1), du signal issu de cette ligne unique ;
- et un moyen d'adaptation (22) activé par ledit organe de pilotage (4) et permettant, pendant des phases d'adaptation Pa) situées au début de chaque période d'écoute, d'adapter la valeur du seuil précité à l'amplitude du signal issu de ladite ligne unique (9) durant cette phase d'adaptation (Pa).

8. Dispositif selon la revendication 7, **caractérisé par le fait que** le moyen d'adaptation est activé pendant une durée déterminée au début de chaque période d'écoute.

9. Dispositif selon l'une des revendications 7 et 8, **caractérisé par le fait que** la chaîne de détection (3) comprend un circuit d'intégration (14, 15) du signal issu de ladite ligne unique, ce circuit étant soumis audit moyen d'adaptation (22).

10. Dispositif selon l'une quelconque des revendications 7 à 9, **caractérisé par le fait que** la chaîne de détection (3) comprend des moyens (22, 24) pour fixer un seuil adapté (S1) et un second seuil (S2) plus élevé que le premier, ces moyens étant commandé par ledit organe de pilotage de telle sorte que le second seuil est activé au moins tant que l'amplitude du signal délivré sur la ligne unique est inférieure à la valeur de ce second seuil durant la phase de chaque période succédant à sa phase d'adaptation précitée.

11. Dispositif selon l'une quelconque des revendications 7 à 10, **caractérisé par le fait que** la chaîne de détection (3) comprend un comparateur (17) dont une entrée est reliée à ladite ligne unique (9) au travers d'une résistance (14) et à un potentiel de référence au travers d'un condensateur (15) et dont l'autre entrée est reliée à ladite ligne unique, ce comparateur délivrant ledit signal de sortie (18), et que ledit moyen d'adaptation comprend un interrupteur (22) de court-circuitage de cette résistance activé par ledit organe de pilotage pendant chaque phase d'adaptation.

12. Dispositif selon la revendication 11, **caractérisé par le fait que** la chaîne de détection (3) comprend un pont résistif (19, 20), ladite résistance (14) et ledit condensateur (15) étant reliés à ladite entrée du comparateur (17) au travers de ce pont de façon à générer un second seuil de valeur accrue et que ledit moyen d'adaptation comprend un interrupteur (24) de court-circuitage de ce pont activé par ledit organe de pilotage au moins tant que l'amplitude du signal issu de la ligne unique est inférieure à la valeur de ce second seuil durant la phase de chaque période succédant à sa phase d'adaptation précitée.

13. Dispositif selon l'une quelconque des revendications 7 à 12, **caractérisé par le fait qu'**il comprend un circuit de traitement (4) des signaux de sortie de la chaîne de détection, agissant sur ledit organe de pilotage de façon à ce que ce dernier prolonge la durée d'une période d'écoute en cas de réception, pendant cette période, d'un signal radioélectrique attendu.

14. Dispositif selon l'une quelconque des revendications 7 à 13, **caractérisé par le fait que** la chaîne de détection (3) comprend un amplificateur (11) monté entre son entrée précitée et son moyen de détection précité.

15. Dispositif selon l'une quelconque des revendications 7 à 14, **caractérisé par le fait que** l'organe de pilotage (4) comprend des moyens pour alimenter sélectivement les circuits de réception.
